# EUROPÄISCHE PATENTSCHRIFT

(11) **EP 2 513 501 B1**
(45) Veröffentlichungstag und Bekanntmachung des Hinweises auf die Patenterteilung: **26.08.2015**
(21) Anmeldenummer: 10710784.9
(22) Anmeldetag: 01.03.2010
(51) Int. Cl.: F16C 19/52, F16C 35/04, F16C 35/077, G01M 13/04

(54) **LAGERMODUL MIT SENSOREINRICHTUNG**
BEARING MODULE HAVING A SENSOR DEVICE
MODULE PALIER DOTÉ D'UN CAPTEUR

(43) Veröffentlichungstag der Anmeldung: 24.10.2012
(73) Patentinhaber: Siemens Aktiengesellschaft, 80333 München (DE)
(72) Erfinder: GATTERMANN, Sven, 90513 Zirndorf (DE); HASSEL, Jörg, 91058 Erlangen (DE); KLEIN, Peter, 90461 Nürnberg (DE); KOWALEWSKI, Ralf, 90768 Fürth (DE); PROBOL, Carsten, 91054 Buckenhof (DE); TISCHMACHER, Hans, 91207 Lauf (DE)
(86) Internationale Anmeldenummer: PCT/EP2010/001256
(87) Internationale Veröffentlichungsnummer: WO 2011/107107

(56) Entgegenhaltungen:
- WO-A1-87/03053
- WO-A2-2005/059492
- US-A1- 2002 181 815
- US-A1- 2006 125 335
- US-A1- 2008 234 964
- US-B1- 6 331 823

## Beschreibung

Die vorliegende Erfindung betrifft ein Lagermodul, das eine fest, austauschbare Baueinheit zum Lagern einer Welle insbesondere einer elektrischen Maschine darstellt, mit einem Träger und einer Lagereinrichtung, die an dem Träger befestigt ist, zur drehbaren Lagerung der Welle. Lager von elektrischen Maschinen unterliegen im Betrieb einer gewissen Veränderung. Diese Veränderung kann im Extremfall besonders stark sein (Ermüdungsschäden, Riffelbildung), wenn über das Lager Lagerströme abfließen. Daher ist es zweckmäßig, das Lager zu überwachen.

Bisher wurden verschiedene Einzelsensoren eingesetzt, deren Messwerte offline aus Kostengründen sporadisch zu einem Zustandsbild verdichtet werden konnten. Dies führt zu einem aufwändigen, schwer automatisierbaren Messvorgang, der zudem den aktuellen Lagerzustand ungenau darstellt. Die Instandhaltungsmaßnahmen können so nicht gezielt festgelegt werden und ein vollständiger Schutz gegen Anlagenausfall kann somit nicht gewährleistet werden.

Das Anbringen eines Einzelsensors an ein Lager ist außerdem mühsam und oft überhaupt nicht möglich. Außerdem kann der Sensor häufig nur annähernd an die gewünschte Position angebracht werden.

Aus der US 6,331,823 ist ein Überwachungssystem für den Betriebszustand eines Lagers bekannt, mit verschiedenen Sensoren, wie einem Geschwindigkeitsmesser, einem Beschleunigungsmesser oder einem Temperatursensor, und einer Schnittstelle zur Kommunikation der Messergebnisse.

Die Aufgabe der vorliegenden Erfindung besteht somit darin, eine zuverlässig überwachbare Lagereinheit bereitzustellen, die außerdem ohne hohen Aufwand montierbar ist.

Erfindungsgemäß wird diese Aufgabe gelöst durch ein Lagermodul, das eine feste, austauschbare Baueinheit zum Lagern einer Welle insbesondere einer elektrischen Maschine darstellt, mit einem Träger und einer Lagereinrichtung, die an dem Träger befestigt ist, zur drehbaren Lagerung der Welle, weiterhin umfassend eine Sensoreinrichtung, die ebenfalls an dem Träger befestigt ist, zur Erfassung einer physikalischen Grö-ße der Lagereinrichtung und eine Schnittstelleneinrichtung, mit der ein Sensorsignal der Sensoreinrichtung von dem Lagermodul nach außen übertragbar ist, die Sensoreinrichtung mehrere Sensoren unterschiedlichen Typs besitzt, wie einen ersten Sensor zur thermischen Überwachung des Trägers sowie einen zweiten Sensor zur Erfassung einer Zeitdauer einer Entladung in der Lagereinrichtung.

In vorteilhafter Weise steht somit ein einziges kompaktes Bauteil zur Verfügung, welches sowohl die Lagerfunktionalität als auch die sensorfunktionalität in sich vereint. Es ist leicht montierbar und stellt die gewonnenen Sensordaten über eine Schnittstelle zur weiteren Verarbeitung zur Verfügung.

Vorzugsweise besitzt die Lagereinrichtung ein Wälzlager (optional ein Gleitlager). Darüber hinaus kann der oben genannte Träger ein Lagergehäuse oder ein Lagerdeckel sein.

Des Weiteren kann die Sensoreinrichtung mehrere Sensoren unterschiedlichen Typs aufweisen. Somit lassen sich über das Lager gleichzeitig mehrere verschiedene Zustandsdaten gewinnen, welche über die Schnittstelleneinrichtung bereitgestellt werden.

Speziell kann die Sensoreinrichtung einen Schwingungssensor zum Erfassen von Schwingungen der Welle aufweisen. Außerdem kann die Sensoreinrichtung einen Ultraschallsensor zum Messen von Laufbahngeometrieänderungen des Wälzlagers der Lagereinrichtung und/oder einen Sensor zur Überwachung des Zustands eines Schmierfilms in der Lagereinrichtung besitzen. Alterna-tiv oder zusätzlich kann die Sensoreinrichtung auch Sensoren zur gleichzeitigen Erfassung von Schmierfilmdicke (direkt oder indirekt z. B. über Kapazitätsmessung) und Lagerspannung in der Lagereinrichtung aufweisen. Damit lassen sich unterschiedlichste Zustandsgrößen eines Lagers in einem einzigen Lagermodul erfassen und bereitstellen.

Das Lagermodul kann außerdem eine Auswerteeinrichtung zum Ermitteln eines Verhältnisses aus einer Lagerspannung und einer Gleichtaktspannung oder zum Ermitteln eines Energieflusses aus Sensorgrößen aufweisen, wobei ein entsprechendes Auswertesignal über die Schnittstelleneinrichtung ausgebbar ist. Grundsätzlich kann die Auswerteeinrichtung auch zu anderen Arten von Vorverarbeitung der Daten ausgebildet sein. Damit lassen sich beispielsweise Daten in einem gewünschten Format bereitstellen.

In einer weiteren Ausführungsform kann die Schnittstelleneinrichtung zur drahtlosen Datenübertragung ausgelegt sein. Auf diese Weise lässt sich der Montageaufwand noch weiter reduzieren.

Wie oben bereits angedeutet wurde, besteht eine besonders vorteilhafte Anwendung darin, die Welle einer elektrischen Maschine mit dem geschilderten Lagermodul auszustatten.

Durch eine bisher nicht zur Verfügung stehende, zeitgleiche Detektion und Auswertung wichtiger, das Lagerverhalten bestimmender Parameter, können schädliche stromdurchgangsbedingte Veränderungen im Bereich von Wälzlagern (z. B. Veränderungen der Laufbahnen durch so genannte Riffelbildung) nicht sicher erkannt werden. Dies ist mit dem erfindungsgemäßen Lagermodul nun möglich.

Die vorliegende Erfindung wird nun anhand der beigefügten Zeichnungen näher erläutert, in denen zeigen:
- FIG 1: einen Querschnitt durch ein Lagermodul gemäß einer ersten Ausführungsform der vorliegenden Erfindung;
- FIG 2: einen Querschnitt durch ein Lagermodul gemäß einer zweiten Ausführungsform der vorliegenden Erfindung;
- FIG 3: einen Querschnitt durch ein Lagermodul gemäß einer dritten Ausführungsform der vorliegenden Erfindung und
- FIG 4: ein Blockschaltdiagramm zum Gewinnen der momentanen Schmierfilmdicke im Lager.

Die nachfolgend näher geschilderten Ausführungsbeispiele stellen bevorzugte Ausführungsformen der vorliegenden Erfindung dar.

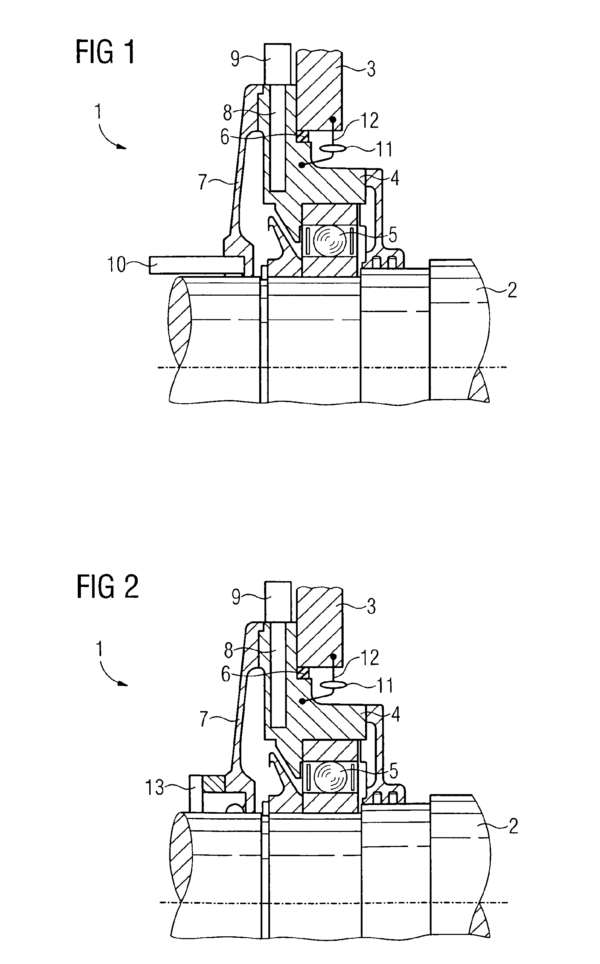

In FIG 1 ist die Hälfte eines Lagermoduls eines Ausführungsbeispiels der vorliegenden Erfindung dargestellt. Das Lagermodul 1 dient hinsichtlich seiner Lagerfunktionalität zur Lagerung einer Welle 2 an einem Lagerschild 3. Das Lagermodul 1 besitzt einen Träger 4, der hier zusammen mit dem Abschnitt 7 ein Lagergehäuse bildet. In den Träger 4 bzw. das Lagergehäuse ist im vorliegenden Beispiel ein Wälzlager 5 eingebaut (ein Gleitlager ist ebenfalls denkbar), das den Träger 4 gegenüber der Welle 2 abstützt. Andererseits ist der Träger 4 an das Lagerschild 3 montiert. Zwischen diesen beiden Komponenten befindet sich eine mechanische und/oder elektrische Isolation 6. Das Lagergehäuse 4, 7 dichtet einen Schmierstoffraum des Wälzlagers 5 nach außen ab.

In das Lagermodul 1 sind in dem Beispiel von FIG 1 mehrere Sensoren eingebaut. Insbesondere befindet sich ein Temperaturfühler 8 in einer Bohrung im Träger 4. Außerdem befindet sich an dem Träger 4 ein Schwingungsaufnehmer 9. An das Lagergehäuse 7, das auch als Teil des Trägers 4 betrachtet werden kann, ist eine Vorrichtung zur Überwachung von Lagerströmen, insbesondere ein Lagerstromsensor 10 angrenzend an die Welle 2 angebracht. Er misst einen Lagerstrom indirekt über kapazitive Spannungsmessung. Die Messung erfolgt also berührungslos. Des Weiteren ist ein Strommesser 11 an ein Kabel 12 angeschlossen, welches den Träger 4 mit dem Lagerschild 3 elektrisch verbindet.

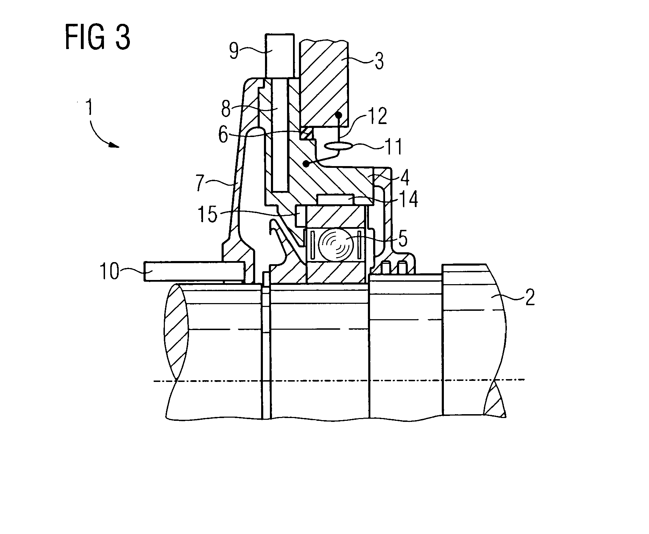

Das Lagermodul 1 kann außerdem über eine Auswerteelektronik verfügen, welche in den Figuren 1 bis 3 nicht dargestellt ist. Außerdem besitzt das Lagermodul 1 eine Datenschnittstelle, um die Daten der Sensoreinrichtung, d. h. der mehreren Sensoren 8 bis 11 nach außen gegebenenfalls drahtlos zu übertragen. Auch diese Schnittstelle ist in FIG 1 wie auch in den Figuren 2 und 3 der Übersicht halber nicht eingezeichnet.

In dem Ausführungsbeispiel von FIG 2 besitzt das Lagermodul 1 im Wesentlichen den gleichen Aufbau wie der des Ausführungsbeispiels von FIG 1. Es wird daher in Bezug auf die gleichen Komponenten beziehungsweise die gleichen Bezugszeichen auf die Beschreibung von FIG 1 verwiesen. Der einzige Unterschied des Lagermoduls von FIG 2 zu dem von FIG 1 besteht darin, dass anstelle des Lagerstromsensors 10 mit kapazitiver Spannungsmessung in FIG 1 ein Lagerstromsensor 13 mit Spannungsmessung mittels Bürste eingesetzt ist. Auch dieser Lagerstromsensor 13 ist an dem Lagergehäuse 7 befestigt. Die Bürste des Lagerstromsensors 13 läuft auf einem nicht näher dargestellten Schleifring der Welle 2.

In dem weiteren Ausführungsbeispiel von FIG 3 ist das Lagermodul ausgebildet wie in FIG 1. Es wird daher ebenfalls auf die Beschreibung zu FIG 1 verwiesen. Zusätzlich ist jedoch in den Träger 4 am Umfang des Wälzlagers 5 ein Sensor 14 für Laufbahngeometrieveränderungen integriert. Außerdem ist in den Träger 4 hier an der Stirnseite des Wälzlagers 5 ein Sensor 15 zur Feststellung von Veränderungen des Schmierfettzustands integriert.

Im Folgenden wird nun die Funktionsweise der Lagermodule insbesondere die der Figuren 1 bis 3 näher erläutert.

Durch die Zusammenfassung mehrerer Sensorprinzipien, die an einem Motor beziehungsweise Lager zu einem gemeinsamen Sensorsystem zusammengefasst werden, ergeben sich deutliche Vorteile für die aktuelle Zustandbestimmung des Motors beziehungsweise Lagers. Das Sensorsystem erfasst reale aber auch virtuelle, errechnete Sensorwerte permanent, so dass fortlaufend, zeitgleich ein aktuelles Zustandsbild des Lagers gewonnen werden kann. Außerdem ergibt sich ein besonderer Vorteil durch die Integration eines oder mehrerer Sensoren beziehungsweise des Sensorsystems in die Lagereinheit, so dass ein multifunktionales Lagermodul bereitgestellt werden kann. Speziell wird das Lagergehäuse und/oder der Lagerdeckel mit entsprechender Sensorik ausgestattet. Nach außen wird eine einzige Schnittstelle herausgeführt, an der die Sensorikdaten bereitgestellt werden.

Das erfindungsgemäße Lagermodul besitzt also einen intelligenten Sensor zur permanenten Online-Überwachung des Lagers. Mit den Sensordaten können beispielsweise mechanische Parameter des Lagers, wie z. B. die Drehzahl, eingestellt werden, so dass sich eine Riffelbildung im Lager vermeiden lässt.

Mit der oben dargestellten Sensorik lässt sich die Zeitdauer von Funkenentladungen ermitteln, die eine essentielle Rolle bei der Lagerstromproblematik spielt. Bei Verlängerung der Zeitdauer der Entladung um den Faktor 10 ändert sich das Volumen, das beaufschlagt wird, um den Faktor 1000, wenn der Effekt dynamisch betrachtet wird. Der Energieeintrag pro Volumeneinheit ist entsprechend geringer.

Mit den Funkenentladungen erwärmt sich das Lager lokal an den Aufschmelzungspunkten. Der thermische Eintrag pro Volumeneinheit und damit die Schädlichkeit ist dem Verhältnis aus Energie W und Zeitdauer T der Entladung zur dritten Potenz proportional, wenn der Vorgang dynamisch betrachtet wird, d. h. die Wärmeleitung berücksichtigt wird. Wird die Entladung verlangsamt, wird sie, was ihre Auswirkung auf die metallischen Wälzlagerkomponenten angeht, unkritischer. Dieser Effekt ist mit einem Plasma-Detektion-Sensor messbar. Hierauf kann z. B. durch eine Veränderung der Umrichterparameter Einfluss auf die Steilheit des Spannungsanstiegs genommen werden oder die Erdung optimiert werden. Negative Auswirkungen von Änderungen an der Installation können ebenfalls durch die Vielzahl der Sensoren festgestellt werden. Beispielsweise treten unter bestimmten Betriebszuständen mechanische Schwingungen auf, die besonders schnelle Entladungen hervorrufen. Beispielsweise treten unter bestimmten Betriebszuständen besonders schnelle Entladungen auf. Dieser Zustand kann erkannt und ein anderer unkritischer Betriebszustand eingestellt werden. Weiterhin könnten starke geometrische Veränderungen der Laufbahn, z. B. in der Lastzone des Wälzlagers durch so genannte Riffelbildung durch Online-Messung von Laufbahngeometrieänderungen z. B. über die Ultraschallprüfmethodik detektiert werden.

Darüber hinaus kann durch die oben vorgestellte Sensorik eine Überwachung des Schmierstoffzustands des Lagers durchgeführt werden. Diese Überwachung kann insbesondere durch eine Detektion der thermischen Schädigung des Schmierfetts (z. B. gasförmige Abbauprodukte) beziehungsweise durch eine stromdurchgangsbedingte Zunahme des Gehalts an Elementen des Laufbahnwerkstoffs (z. B. Eisen) erfolgen. Weiterhin kann auf stromdurchgangsbedingte Veränderungen (Schädigungsakkumulation) des Schmierstoffs indirekt durch die sich verändernden Charakteristika der Stromdurchgangsereignisse geschlossen werden. Die Detektion der riffelbedingten Laufbahnveränderungen beziehungsweise die Detektion von Abbauprodukten des Schmierfetts setzen voraus, dass die Sensoren, wie in FIG 3 angedeutet ist, im Bereich der Lastzone des Lagers beziehungsweise in der Nähe des Schmierspalts angeordnet sind.

Sofern eine Auswerteeinrichtung in dem Lagermodul vorhanden ist, ist die Durchführung einer Online-FFT-Schwingungsanalyse und hieraus unter anderem auch die Analyse der an die Motorwelle angeschlossenen Aggregate implementierbar. Die Online-Schwingungsanalyse kann mittels Schwingungsaufnehmer (vertikale und/oder horizontale Richtung) und anschließender FFT-Schwingungsanalyse zur Charakterisierung des Lagerzustands (Riffelgrad) über Anstieg der Schwingungsbeschleunigung und Schwingungsgeschwindigkeit bei diskreten Frequenzen erfolgen. Diese diskreten Frequenzen sind abhängig von der Motordrehzahl, der Lagerdimensionen, der Wälzkörperanzahl und dem Riffelabstand. Da diese Größen bekannt sind, können die entsprechenden, die Schädigung anzeigenden Frequenzen ermittelt werden. Es sind aber auch Fehler der an der Welle angeschlossenen Aggregate erkennbar. Die Auswertungen sind hier jedoch spezifisch für die Aggregat-Technologie (z. B. bei Pumpen anders als bei Zementmühlen).

Mithilfe des erfindungsgemäßen Lagermoduls können auch Plasma-Entladungen minimiert werden, die das Lager schädigen. Die Plasma-Entladungen rufen einen besonders hohen Materialabtrag hervor, der zur Riffelbildung führt. Ein Kombi-Sensor, der unter anderem die Zeitdauer der Entladungen (direkt oder indirekt) misst, kann in Verbindung mit der Messung weiterer Größen eine Optimierung beziehungsweise Erkennung von ungünstigen Zuständen ermöglichen. Beispielsweise treten unter bestimmten Betriebszuständen kurzzeitige Entladungen auf. Diese Zustände können erkannt und es können entsprechende Gegenmaßnahmen ergriffen werden.

Mit dem Lagermodul beziehungsweise einer daran angeschlossenen Auswerteeinheit ist eine Identifikation der Auswirkungen von Stromdurchgangsereignissen durch das Lager möglich. Beispielsweise können so anhand von elektromagnetischen Wellen elektrische Veränderungen aufgrund der Stromdurchgangsereignisse erkannt werden. Außerdem können mechanische Veränderungen bedingt durch Schwingungen aus geometrischen Laufbahnveränderungen oder Schwingungen aus Durchschlagsereignissen erkannt werden. Weiterhin können auch Veränderungen im Bereich des Schmierfetts durch z. B. Veränderungen des Fetts (Eisengehalt, Zersetzungsprodukte), Zusetzen eines Indikators/Verbrauchsmessung, Detektion von Zersetzungsprodukten des Schmierfetts, Geometrieveränderungen der Laufbahnen und Ultraschallmessung der Wanddickenveränderung der Laufbahn erkannt werden.

Ferner kann ein entsprechend ausgestattetes Lagermodul die gleichzeitige Erfassung von Schmierfilmdicke (direkt oder indirekt z. B. über Kapazitätsmessung) und Lagerspannung ermöglichen. So kann beispielsweise die Schmierfilmdicke über Kapazitätsmessung aus einer Ladekurve ermittelt werden. Die Lagerspannung lässt sich direkt messen. Durch das Produkt aus gemessener Lagerspannung und den mit Sensor 11 ermittelten Wert für den indirekten Lagerstrom über die Überbrückung 12 der Isolation 6 lässt sich ein sog. Lager-Leistungswert ermitteln. Mit der Integration über die Zeit folgt die durch das Lager fließende Energie. Damit ist eine Anzahl kritischer Lagerstromereignisse (Energieeintrag zur Bestimmung des Schädigungsfortschritts) ermittelbar beziehungsweise schätzbar. Hintergrund dieser Methode ist, dass die Durchschlagsspannung direkt von der Schmierfilmdicke abhängt. Riffelbildung tritt oberhalb eines Grenzwertes für die durch das Lager fließende Energie auf. Die Energie muss hinreichend groß sein, dass eine Verdampfung des Laufbahnmaterials stattfindet. Ist die Energie unterhalb dieses Wertes, findet lediglich eine Materialaufschmelzung statt. Gezählt werden nur Ereignisse welche diese Verdampfungsbedingung erfüllen. Über die Häufigkeit dieser Ereignisse kann die Ausfallwahrscheinlichkeit innerhalb eines bestimmten Zeitraums ermittelt werden.

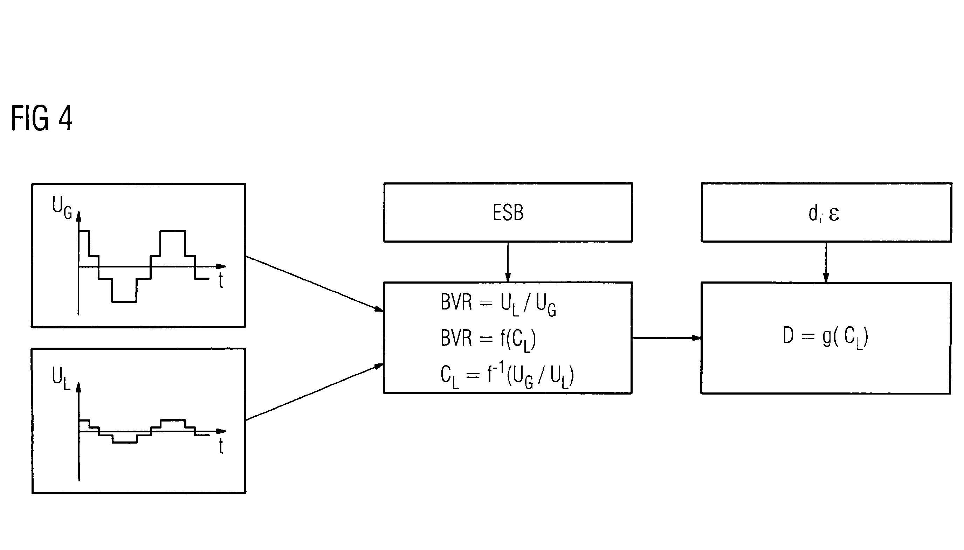

Mit einem geeignet ausgestatteten Lagermodul kann aber auch ein Energiefluss im Lager aus Kapazitätsbestimmung und Ladungsabfluss bestimmt werden. Die Kapazität C_{L} des Lagers über dem Schmierfilm geht linear in die Energie der Entladung ein. Sie kann dynamisch über das BVR (Bearing Voltage Ratio) bestimmt werden, wenn die anderen Kapazitäten und das Ersatzschaltbild ESB beispielsweise des Motors bekannt sind. Daraus lässt sich auf die Energie schließen. Bei vorhandener Information über weitere mechanische Größen (Geometrie d der Wälzkörper und der Laufbahnen, die Elektrizitätskonstante ξ des Lagerfetts) kann auch die Schmierfilmdicke D berechnet werden (vgl. FIG 4).

Die Auswertung des Verhältnisses BVR aus Lagerspannung U_{L} und Gleichtaktspannung U_{G} an den Motorklemmen kann dadurch verbessert werden, dass eine Auswerteelektronik die "flachen Bereiche" der Lagerspannung U_{L} und der Gleichtaktspannung U_{G} erfasst. Sie kann dadurch Schaltspitzen minimieren. Außerdem ist es vorteilhaft, bei Kurvenverläufen das BVR zu bestimmen, bei denen kein Lagerstrom stattfand. Dies ist in Kombination mit der Vorrichtung zur Überwachung von Lagerströmen bzw. dem Lagerstromsensor realisierbar.

Eine kostengünstige Realisierung ist möglich, wenn die Gleichtaktspannung U_{G} nicht gemessen wird. Die Amplitude der Gleichtaktspannung U_{G} wird durch die Zwischenkreisspannung des Umrichters bestimmt. Sodann wird die Berechnung anhand der bekannten Zwischenkreisspannung des Umrichters durchgeführt. Sollte z. B. bei Bahnfahrzeugen eine in gewissen Grenzen schwankende Gleichspannung verwendet werden, kann diese von der Umrichterelektronik zur Berechnung bereitgestellt werden. Vorteilhaft ist es auch, die Auswertung des Kombisensors in der Umrichterelektronik, also auf bereits vorhandener Elektronik, durchzuführen.

Die Gleichungen in FIG 4 deuten noch einmal an, wie aus der Gleichtaktspannung U_{G} und der Lagerspannung U_{L} die momentane Schmierfilmdicke D im Lager erhalten werden kann. Dabei bedeuten t die Zeit, BVR die Bearing Voltage Ratio (Verhältnis von U_{L} zu U_{G}), C_{L} die Kapazität über dem Motorlager, F und G Funktionen (zu ermitteln anhand des Ersatzschaltbildes ESB beziehungsweise der geometrischen Daten d und der Elektrizitätskonstante e des Lagerfetts) und f⁻¹ die Umkehrfunktion zu f.

Mit dem erfindungsgemäßen Lagermodul können auch Kombinationen verschiedener Ausprägungen der Schädigung gegebenenfalls über mehrere Wege ermittelt werden. Hierdurch wird der Sensor robuster und somit zuverlässig in seinen Aussagen. Durch die umfassende Zustandsbeurteilung des Lagers kann eine klare Korrelation zwischen gemessenen Lagerströmen und Schäden am Motorlager festgestellt werden.

Zusammenfassend lässt sich somit feststellen, dass durch die mehreren Sensoren in dem Lagermodul, d. h. durch das gemeinsame Sensorsystem reale aber auch virtuelle, errechnete Sensorwerte permanent zu einem Zustandsbild des Lagers verdichtet werden. Das Zustandsbild ergibt sich auf der Basis einer Kombination aller oder eines Teils der folgenden detektierten, physikalischen Größen:
- Lagerstrom (kapazitive oder induktive Messwerterfassung zur Identifizierung der Lagerspannung)
- Temperatur der Lagerschalen
- Lagerstrom über eine Lagerisolationsüberbrückung
- Schwingungen
- Schmierfilm-Stärken/Dicken-Ermittlung (virtueller Sensor)
- Fettzustand
- geometrische Veränderungen der Laufbahnen (z. B. durch Riffelbildung)

Abhängig vom Betriebszustand und den weiteren oben genannten Messgrößen ändern sich die Arten der Lagerströme und die Amplituden. Durch Online-Überwachung können kritische Zustände speziell für Lagerströme oder auch für sonstige thermische beziehungsweise mechanische Größen ermittelt werden. Der Fettzustand kann gemessen oder anhand der gemessenen Größen die Restgebrauchsdauer des Schmierstoffs beurteilt werden.

Weitere Ausführungsbeispiele bestehen beispielsweise darin, dass in das Lagermodul eine Energieversorgungseinrichtung integriert wird, mit der beispielsweise Energie aus der Drehbewegung der Welle gewonnen werden kann. In einem weiteren Ausführungsbeispiel erfolgt die Datenabgabe mit der Schnittstelle über Funk oder kabelgebunden über eine Leitung.

### Bezugszeichenliste

- 1: Lagermodul
- 2: Welle
- 3: Lagerschild
- 4: Träger
- 5: Wälzlager
- 6: Isolation
- 7: Abschnitt
- 8: Temperaturfühler
- 9: Schwingungsaufnehmer
- 10, 13: Lagerstromsensor
- 11: Strommesser
- 12: Kabel
- 14, 15: Sensor

## Patentansprüche

1. Lagermodul, das eine feste, austauschbare Baueinheit zum Lagern einer Welle (2) insbesondere einer elektrischen Maschine darstellt, mit
- einem Träger (4) und
- einer Lagereinrichtung (5), die an dem Träger (4) befes-tigt ist, zur drehbaren Lagerung der Welle (2), und
- einer Sensoreinrichtung (8 bis 15), die ebenfalls an dem Träger (4) befestigt ist, zur Erfassung einer physikalischen Größe der Lagereinrichtung (5) und
- eine Schnittstelleneinrichtung, mit der ein Sensorsignal der Sensoreinrichtung von dem Lagermodul nach außen übertragbar ist wobei
- die Sensoreinrichtung (8 bis 15) mehrere Sensoren unterschiedlichen Typs besitzt, beinhaltend
- einen ersten Sensor (8) zur thermischen Überwachung des Trägers (4),
**dadurch gekennzeichnet, dass** die Sensoreinrichtung (8 bis 15) einen zweiten Sensor zur Erfassung einer Zeitdauer einer Entladung in der Lagereinrichtung (5) beinhaltet.

2. Lagermodul nach Anspruch 1, wobei die Lagereinrichtung (5) ein Wälzlager aufweist.

3. Lagermodul nach Anspruch 1 oder 2, wobei der Träger (4) ein Lagergehäuse oder ein Lagerdeckel ist.

4. Lagermodul nach einem der vorhergehenden Ansprüche, wobei die Sensoreinrichtung (8 bis 15) einen Schwingungssensor (9) zum Erfassen von Schwingungen der Welle (2) aufweist.

5. Lagermodul nach einem der vorhergehenden Ansprüche, wobei die Sensoreinrichtung (8 bis 15) einen Ultraschallsensor (14) zum Messen von Laufbahngeometrieänderungen des Wälzlagers der Lagereinrichtung (5) aufweist.

6. Lagermodul nach einem der vorhergehenden Ansprüche, wobei die Sensoreinrichtung (8 bis 15) einen Sensor (15) zur Überwachung des Zustands eines Schmierstoffs in der Lagereinrichtung (5) umfasst.

7. Lagermodul nach einem der vorhergehenden Ansprüche, wobei die Sensoreinrichtung (8 bis 15) Sensoren zur gleichzeitigen Erfassung von Schmierfilmdicke und Lagerspannung in der Lagereinrichtung (5) aufweist.

8. Lagermodul nach einem der vorhergehenden Ansprüche, das eine Auswerteeinrichtung zum Ermitteln eines Verhältnisses aus einer Lagerspannung und einer Gleichtaktspannung oder zum Ermitteln eines Energieflusses aus Sensorgrößen aufweist, wobei ein entsprechendes Auswertesignal über die Schnittstelleneinrichtung ausgebbar ist.

## Claims

1. Bearing module having a fixed, interchangeable assembly for mounting a shaft (2), particularly a shaft of an electric machine, comprising
- a carrier (4) and
- a bearing device (5) which is fastened to the carrier (4) for rotatably mounting the shaft (2), and
- a sensor device (8 to 15), which is also fastened to the carrier (4), for detecting a physical quantity of the bearing device (5) and
- an interface device, with which a sensor signal of the sensor device can be outwardly transmitted from the bearing module, wherein
- the sensor device (8 to 15) comprises a plurality of sensors of different types, containing
- a first sensor (8) for thermal monitoring of the carrier (4),
**characterised in that** the sensor device (8 to 15) contains a second sensor for detecting a time duration of a discharge in the bearing device (5).

2. Bearing module according to claim 1, the bearing device (5) comprising a roller bearing.

3. Bearing module according to claim 1 or 2, the carrier (4) being a bearing housing or a bearing cover.

4. Bearing module according to one of the preceding claims, wherein the sensor device (8 to 15) comprises a vibration sensor (9) for detecting vibrations of the shaft (2).

5. Bearing module according to one of the preceding claims, wherein the sensor device (8 to 15) comprises an ultrasonic sensor (14) for measuring running path geometry changes of the roller bearing of the bearing device (5).

6. Bearing module according to one of the preceding claims, the sensor device (8 to 15) comprising a sensor (15) for monitoring the state of a lubricant in the bearing device (5).

7. Bearing module according to one of the preceding claims, the sensor device (8 to 15) comprising sensors for simultaneous detection of lubricant film thickness and bearing voltage in the bearing device (5).

8. Bearing module according to one of the preceding claims, comprising an evaluating device for determining a ratio of a bearing voltage to a common-mode voltage or for determining an energy flow from sensor quantities, wherein a suitable evaluation signal can be output via the interface device.

## Revendications

1. Module palier, qui constitue une unité modulaire remplaçable fixe, pour le logement d'un arbre (2) en particulier d'une machine électrique, avec
- un support (4) et
- un dispositif de palier (5), qui est fixé au support (4), pour le logement en rotation de l'arbre (2), et
- un dispositif de capteurs (8 à 15), qui est également fixé au support (4), pour l'acquisition d'une grandeur physique du dispositif de palier (5) et
- un dispositif d'interface, avec lequel un signal de capteur du dispositif de capteurs peut être transféré depuis le module palier vers l'extérieur,
dans lequel
- le dispositif de capteurs (8 à 15) possède plusieurs capteurs de types différents, contenant un premier capteur (8) pour la surveillance thermique du support (4), **caractérisé en ce que** le dispositif de capteurs (8 à 15) contient un deuxième capteur pour l'acquisition d'une durée d'un déchargement dans le dispositif de palier (5).

2. Module palier selon la revendication 1, dans lequel le dispositif de palier (5) présente un palier à roulement.

3. Module palier selon la revendication 1 ou 2, dans lequel le support (4) est un logement de palier ou un chapeau de palier.

4. Module palier selon l'une des revendications précédentes, dans lequel le dispositif de capteurs (8 à 15) présente un capteur de vibrations (9) pour l'acquisition de vibrations de l'arbre (2).

5. Module palier selon l'une des revendications précédentes, dans lequel le dispositif de capteurs (8 à 15) présente un capteur à ultrasons (14) pour la mesure de modifications de la géométrie de bandes de roulement du palier à roulement du dispositif de palier (5).

6. Module palier selon l'une des revendications précédentes, dans lequel le dispositif de capteurs (8 à 15) comprend un capteur (15) pour la surveillance de l'état d'un lubrifiant dans le dispositif de palier (5).

7. Module palier selon l'une des revendications précédentes, dans lequel le dispositif de capteurs (8 à 15) présente des capteurs pour l'acquisition simultanée d'une épaisseur de film lubrifiant et d'une tension de palier dans le dispositif de palier (5).

8. Module palier selon l'une des revendications précédentes, qui présente un dispositif d'évaluation pour la détermination d'un rapport à partir d'une tension de palier et d'une tension de mode commun ou pour la détermination d'un flux d'énergie à partir de grandeurs de capteurs, dans lequel un signal d'exploitation correspondant peut être émis via le dispositif d'interface.
